Europäisches Patentamt

European Patent Office

Office européen des brevets

(19)

(11) Numéro de publication: **0 067 919**
A1

(12) **DEMANDE DE BREVET EUROPEEN**

(21) Numéro de dépôt: 81810209.7

(22) Date de dépôt: 01.06.81

(51) Int. Cl.³: **F 16 L 9/14**
F 16 L 11/08, B 29 D 23/00

(43) Date de publication de la demande:
29.12.82 Bulletin 82/52

(84) Etats contractants désignés:
AT BE CH DE FR GB IT LI LU NL SE

(71) Demandeur: PABRECO S.A.
2, Rte Mgr. Besson
CH-1700 Fribourg(CH)

(72) Inventeur: Mattes, Rolf
8, Rte Mgr. Besson
CH-1700 Fribourg(CH)

(74) Mandataire: Moinas, Michel
c/o Moinas & Cie Case Postale 88 5, rue Saint-Léger
CH-1211 Genève 4(CH)

(54) Tuyau en matière plastique renforcé par une armature.

(57) Le tuyau en matière plastique est pourvu d'une armature constituée par un tuyau métallique (2) et si désiré, d'un réseau (6) métallique ou textile.

On extrude un tuyau interne (1), qu'on laque d'une couche plastique (4). On enroule alors une enveloppe métallique formant tuyau (2) dont on soude la couture au laser. On laque ce tuyau métallique (2) d'une couche plastique (5), puis on extrude par dessus le tuyau plastique (3) externe. La soudure des divers tuyaux est assurée thermiquement.

Le tuyau métallique (2) peut être gainé par un réseau.

EP 0 067 919 A1

TUYAU EN MATIERE PLASTIQUE RENFORCE PAR UNE ARMATURE

L'invention a trait à un tuyau en matière plastique renforcé par une armature.

On connaît des tuyaux en matière plastique renforcés par une armature textile. De tels tuyaux en matière plastique sont flexibles mais ont l'inconvénient que leur section se déforme sous l'effet d'une pression. De plus, il n'existe en pratique que des tuyaux en matière plastique très flexibles ou très rigides.

On ne connaît pas de qualité de tuyau en matière plastique qui corresponde à un matériau semi-rigide tel que par exemple le cuivre.

L'invention se propose d'y remédier en mettant à disposition un tuyau en matière plastique dont la flexibilité se rapproche de celle d'un tuyau en cuivre et dont la section interne ne se déforme pas sous l'effet d'une pression. Ceci est réalisé selon l'invention par le fait que l'armature est un tuyau métallique.

Selon une forme particulière, le tuyau comporte un tuyau interne en matière plastique par exemple en polyamide, en polyimide, en polyéthylène, en polypropylène, en polystyrène, etc., sur lequel est enroulé un tuyau métallique, en alluminium , fer ou leurs alliages notamment, sur lequel est à son tour extrudé un tuyau externe en matière plastique, par exemple en polyamide ou autres comme cités ci-dessus.

Selon une forme préférée, le tuyau métallique est gainé par un réseau pour augmenter la résistance à l'éclatement, lequel réseau peut être au choix métallique ou textile, par exemple en aluminium ou ses alliages, en laiton, cordes à piano, nylon, polyester, etc...

Un tel tuyau semi-rigide peut être cependant facile-

- 2 -

0067919

ment courbé et vissé à ses extrémités de sorte qu'on puisse éviter un soudage ou un taraudage.

On le fabrique en extrudant d'abord le tuyau interne. On laque ensuite, de préférence à froid, la surface du tuyau interne avec une couche de matière plastique capable d'assurer une adhérence entre le tuyau métallique destiné à le recouvrir et le tuyau interne. On enroule ensuite l'enveloppe métallique de manière à assurer un recouvrement de la couture et on soude thermiquement le tuyau interne avec le tuyau métallique. De son côté, la couture métallique est soudée au laser . On laque à nouveau, de préférence à froid, la surface du tuyau métallique avec une couche de matière plastique qui assure une adhérence entre le tuyau métallique et le tuyau en matière plastique destiné à le recouvrir. Enfin, on extrude par dessus le tuyau externe en matière plastique et on soude thermiquement. Avantageusement le tuyau métallique est gainé par un réseau.

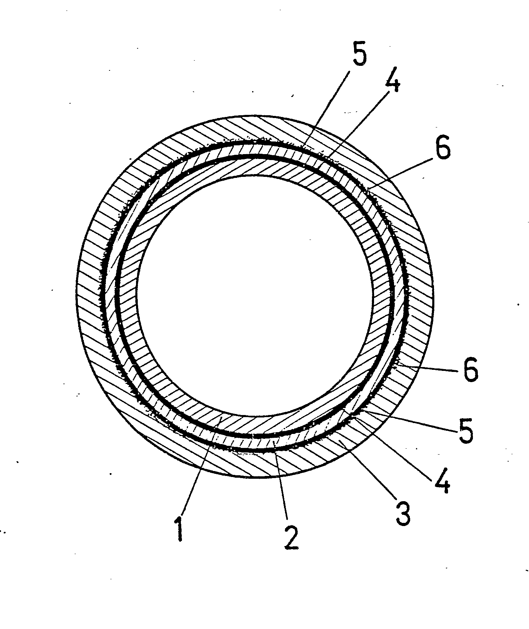

Le dessin montre à titre d'exemple une forme d'exécution.

Le tuyau interne désigné par 1 est en matière plastique par exemple à base de polyamide. On enroule sur ce tuyau interne 1 une enveloppe métallique de manière à assurer le recouvrement et on soude la couture au laser pour former un tuyau métallique 2.

On soude thermiquement le tuyau interne 1 avec le tuyau métallique 2 et on extrude sur le tuyau métallique 2 un tuyau externe 3 en matière plastique par exemple à base de polyamide.

Des couches de matière plastique 4, 5 sont appliquées entre le tuyau interne et le tuyau métallique, respectivement entre le tuyau métallique et le tuyau externe, de manière à assurer la soudure entre les divers tuyaux 1, 2, 3 constitutifs du tuyau renforcé. Un réseau textile 6, en nylon ou en cordes à piano par exemple, est intercalé entre le tuyau métallique 2 et le tuyau plastique externe 3.

Les épaisseurs relatives des différents tuyaux constitutifs peuvent être choisies librement, en fonction de l'usage qu'on veut faire du tuyau renforcé. Ainsi, les tuyaux plastiques interne et externe peuvent avoir une épaisseur comprise entre 1 et 10 mm, les matières elles-mêmes étant adaptées au fluide transporté d'une part, et à la protection extérieure désirée d'autre part. Le tuyau métallique a, lui, une épaisseur comprise typiquement entre 0,1 et 20 mm, selon la résistance mécanique et la rigidité demandées. Quant au réseau ou treillis textile, il peut aller de 600 à 10000 deniers. Enfin, l'épaisseur des laques plastiques intermédiaires est comprise entre 1/10 et 1mm.

En coupe, le tuyau renforcé, une fois fini, se présente comme constitué de 3 couches, ou de 4 s'il comprend un réseau métallique ou textile. Si les laques d'adhésion ont une épaisseur suffisante, on peut, quoique difficilement, arriver à discerner celles-ci. Le tuyau semble alors constitué de 5 couches ou 6 s'il comprend un réseau.

Ces tuyaux renforcés sont à recommander pour les conduites sous pression, notamment pour l'air comprimé et les circuits hydrauliques. Bien que présentant une certaine rigidité, ils peuvent être déformés, sans qu'il en résulte une quelconque conséquence sur le plan de la tenue mécanique et de la durée de vie. Ils peuvent être utilisés pour véhiculer des liquides alimentaires, le tuyau interne étant alors en plastique de qualité alimentaire, ou des liquides corrosifs, certains produits chimiques par exemple.

- 4 -

0067919

<div align="center">

REVENDICATIONS

</div>

1.  Tuyau en matière plastique renforcé par une armature, caractérisé par le fait que l'armature est un tuyau métallique (2).

2.  Tuyau en matière plastique renforcé par une armature selon la revendication 1, caractérisé par le fait qu'il est constitué d'un tuyau interne (1) en matière plastique, sur lequel est enroulé un tuyau métallique (2) sur lequel est à son tour extrudé un tuyau externe en matière plastique.

3.  Tuyau selon la revendication 1, caractérisé par le fait que le tuyau interne (1) et le tuyau métallique (2) enroulé sont soudés entre eux thermiquement par l'intermédiaire d'une laque en matière plastique

4.  Tuyau selon la revendication 1, caractérisé par le fait que le tuyau métallique (2) et le tuyau externe (3) sont soudés entre eux thermiquement par l'intermédiaire d'une laque en matière plastique.

5.  Tuyau selon la revendication 2, caractérisé par le fait que le tuyau métallique (2) est gainé par un réseau (6).

6.  Tuyau selon la revendication 5, caractérisé par le fait que le réseau (6) est métallique ou textile.

7.  Tuyau selon la revendication 1, caractérisé par le fait que la couture du tuyau métallique (2) enroulé est soudée au laser.

8.  Procédé de fabrication de tuyaux selon la revendication 1, caractérisé par le fait que

    1) on extrude le tuyau interne (1),

2) on laque la surface de celui-ci avec une couche (4) de matière plastique capable d'assurer une adhérence entre le tuyau interne (1) et le tuyau métallique (2) destiné à le recevoir,

3) on enroule l'enveloppe métallique de manière à assurer un recouvrement de la couture, qu'on soude pour obtenir le tuyau métallique (2),

4) on soude thermiquement le tuyau interne (1) avec le tuyau métallique (2),

5) on laque la surface du tuyau métallique (2) avec une couche (5) de matière plastique capable d'assurer une adhérence entre le tuyau métallique (2) et le tuyau externe (3) destiné à le recevoir,

6) on extrude le tuyau externe (3),

7) on soude thermiquement le tuyau métallique (2) avec le tuyau externe (3).

9. Procédé selon la revendication 8, caractérisé par le fait qu'on gaine le tuyau métallique (2) d'un réseau (6) métallique ou textile.

10. Procédé selon la revendication 8, caractérisé par le fait qu'on soude la couture du tuyau métallique (2) au laser.

0067919

$\frac{1}{1}$

**0067919**

Numéro de la demande

**EP 81 81 0209**

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| | US - A - 3 905 853 (STENT) | |
| X | * colonne 4, ligne 43; colonne 6, lignes 6-9; colonne 6, ligne 48 - colonne 8, ligne 9 * | 1-6, 8,9 |
| Y | -- | 5-7, 9,10 |
| | GB - A - 773 983 (MELSOM) | |
| X | * page 2, lignes 53-91 * | 1,8 |
| Y | -- | 5,6,9 |
| Y | US - A - 4 029 932 (COOK) | |
| | * abrégé * | 7,10 |
| | -- | |
| X | FR - A - 2 019 618 (GUTEHOFFNUNGS-HUTTE) | |
| | * page 3, ligne 10 - page 4, ligne 8 * | 1-4,8 |
| | ------------ | |

**CLASSEMENT DE LA DEMANDE (Int. Cl. 3)**

F 16 L 9/14
11/08
B 29 D 23/00

**DOMAINES TECHNIQUES RECHERCHES (Int. Cl. 3)**

F 16 L
B 23 K

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 11-03-1982 | ATKINS |

OEB Form 1503.1   06.78